# EUROPÄISCHE PATENTSCHRIFT

(11) **EP 0 324 497 B1**
(45) Veröffentlichungstag und Bekanntmachung des Hinweises auf die Patenterteilung: **18.05.1994**
(21) Anmeldenummer: 89100545.6
(22) Anmeldetag: 13.01.1989
(51) Int. Cl.: C09D 163/00, C08L 23/00

(54) **Beschichtungszusammensetzung und deren Verwendung als Haftprimer für Kunststoffoberflächen**
Coating composition and its use as a primer for plastics
Composition de revêtement et son application comme couche d'ancrage sur matières plastiques

(30) Priorität: 15.01.1988 DE 3800938
(43) Veröffentlichungstag der Anmeldung: 19.07.1989
(73) Patentinhaber: Herberts Gesellschaft mit beschränkter Haftung, 42285 Wuppertal (DE)
(72) Erfinder: Hellmann, Udo, D-5630 Remscheid 11 (DE); Stephan, Werner, D-5600 Wuppertal 1 (DE); Sadowski, Fritz, Dr., D-5024 Pulheim 2 (DE)
(74) Vertreter: Türk, Gille, Hrabal, Leifert

(56) Entgegenhaltungen:
- EP-A- 0 238 327
- GB-A- 2 099 001
- US-A- 3 676 391

## Beschreibung

Die Erfindung betrifft eine Beschichtungszusammensetzung auf der Basis von Ethylen-vinylacetat-Copolymeren, chlorierten Polyolefinen, Epoxidharzen und organischen Lösemitteln, die insbesondere als Haftprimer bzw. Haftvermittler für Beschichtungen auf Kunststoffsubstraten geeignet ist. Sie betrifft auch deren Verwendung als Haftprimer auf Kunststoffoberflächen.

Die Beschichtung von Kunststoffoberflächen, insbesondere von Polypropylenoberflächen mit Überzugsmitteln ist häufig aufgrund der schlechten Hafteigenschaften der Beschichtungsmittel, problematisch. Dies trifft insbesondere bei der Beschichtung von Kunststoffteilen im Kaftfahrzeugbau bzw. bei Reparaturen von Kraftfahrzeugteilen insbesondere auf Kunststoffbasis zu. Besonders die Beschichtung von Polypropylenoberflächen erwies sich als schwierig. So war beispielsweise eine Vorbehandlung des Polypropylens erforderlich, um eine günstige Haftung von Überzugsmitteln, insbesondere Füllern und Lackschichten zu erzielen.

Die US-A-3,676,391 beschreibt Primer oder Decklackbeschichtungen für Polyolefinsubstrate. Die Primer bestehen aus Ethylenvinylacetatcopolymeren zusammen mit chlorierten Polyolefinen mit einem Chlorgehalt von 25 bis 29 Gew.% zusammen mit organischen Lösemitteln. Die Decklacküberzugsmittel bestehen aus thermoplastischen Acrylaten, chlorierten Polyolefinen mit einem Chlorgehalt zwischen 25 und 29 Gew.% sowie gegebenenfalls anteilsweise weiteren thermoplastischen Bindemitteln. Es werden keine Zusätze von reaktiven vernetzbaren Polymeren oder speziellen Epoxidharzen beschrieben.

Aufgabe der Erfindung ist die Bereitstellung eines Haftvermittlers, der insbesondere für die Beschichtung von Kunststoffsubstraten geeignet ist und eine Lackierung der Kunststoffsubstrate ohne komplizierte Vorbehandlung bei günstiger Haftung ermöglicht.

Diese Aufgabe wird erfindungsgemäß durch die Bereitstellung einer Beschichtungszusammensetzung gelöst, die neben üblichen lacktechnischen Hilfsmitteln, Pigmenten und/oder Füllstoffen enthält:
a) 1 - 5 Gew.% eines oder mehrer Ethylen-vinylacetat-Copolymerer mit einem Gehalt an Vinylacetat-Einheiten von 27 - 42 Gew.%,
b) 0,5 - 5 Gew.% eines oder mehrerer chlorierter Polyolefine mit einem Chlorgehalt von 10 bis 25 Gew.%,
c) 0,01 - 5 Gew.% eines oder mehrerer Epoxidharzes auf der Basis aromatischer Polyole mit Epichlorhydrin,
d) 85 - 98,49 Gew.% eines oder mehrerer organischer Lösemittel.

Die erfindungsgemäße Beschichtungszusammensetzung enthält 1 bis 5 Gew.%, vorzugsweise 2 bis 4 Gew.% Ethylen-vinylacetat-Copolymere. Das chlorierte Polyolefin, bei dem es sich auch um ein Gemisch mehrerer chlorierter Polyolefine handeln kann, ist in einer Menge von 0,5 - 5 Gew.%, vorzugsweise von 2 - 3 Gew.% vorhanden. Die in der erfindungsgemäßen Beschichtungszusammensetzung enthaltenen Epoxidharze sind in einer Menge von 0,01 bis 5 Gew.%, vorzugsweise von 0,05 bis 1 Gew.% vorhanden.

Als Ethylen-vinylacetat-Copolymere sind solche Copolymere geeignet, wie sie beispielsweise für Schmelzkleber üblich sind und die in üblichen lacktechnischen Lösemitteln löslich sind. Die erfindungsgemäß verwendbaren Ethylen-vinylacetat-Copolymer weisen einen Vinylacetatgehalt von 27 bis 42 Gew.% auf. Beispiele für verwendbare Ethylen-vinylacetat-Copolymere sind die Handelsprodukt ELVAX® mit Vinylacetatgehalten von 27 - 42 Gew.%; insbesondere von 30 - 40 Gew.%.

Als chlorierte Polyolefine können beispielsweise Chlorpolyethylen, Chlorpolypropylen oder Gemische davon und besonders bevorzugt Chlorpolypropylen, wie sie üblicherweise für Lackrohstoffe eingesetzt werden, Verwendung finden. Der Chlorgehalt beträgt 10 bis 25 Gew.%. Solche chlorierte Polyolefine sind übliche Handelsprodukte.

Das in der erfindungsgemäßen Beschichtungszusammensetzung verwendete Epoxidharz ist ein Reaktionsprodukt eines aromatischen Polyols, insbesondere eines Bisphenols, wie Bisphenol A, Bisphenol B und Bisphenol F, mit Epichlorhydrin. Besonders bevorzugt sind Reaktionsprodukte von Bisphenol A und Epichlorhydrin. Die bevorzugten Molekulargewichte liegen bei 250 bis 750, bei einem Epoxidwert von 0,3 bis 0,7 (Anzahl der Mole Epoxidsauerstoff pro 100 g Harz). Beispiele sind für lacktechnische Zwecke verwendbare Handelsprodukte, z. B. ein Reaktionsprodukt von Bis-phenol A und Epichlorhydrin, mit einem Molgewicht von etwa 350 - 400 und einem Epoxidwert von etwa 0,50 - 0,55.

Die erfindungsgemäßen Beschichtungszusammensetzungen weisen einen Gehalt von 85 bis 98,49 Gew.% eines organischen Lösemittels auf. Geeignet sind sämtliche in der Lacktechnik verwendeten organische Lösemittel, die zur Auflösung der übrigen Bestandteile geeignet sind. Bevorzugt sind aromatische Lösemittel, wie beispielsweise Xylol und besonders bevorzugt Toluol, gegebenenfalls auch Gemische davon und mit anderen Lösemitteln.

Die erfindungsgemäßen Beschichtungszusammensetzungen können zusätzlich zu den vorstehend genannten Mengenanteilen der Einzelkomponente weitere Bestandteile enthalten. Beispiele hierfür sind übliche lacktechnische Hilfsmittel, Pigmente und/oder Füllstoffe.

Bei den erfindungsgemäßen Beschichtungszusammensetzungen handelt es sich um anwendungstechnische fertige, z. B. um spritzfertige Zusammensetzungen. Der Auftrag erfolgt bevorzugt im Spritzverfahren. Die erfindungsgemäße Zusammensetzung kann beispielsweise als Haftvermittler auf Kunststoffoberflächen aufgespritzt werden. Geeignet sind alle Kunststoffoberflächen, insbesondere Kunststoffe, die an Kraftfahrzeugen eingesetzt werden. überraschenderweise hat es sich gezeigt, daß die erfindungsgemäße Beschichtungszusammensetzung insbesondere als Haftvermittler für Polypropylenoberflächen eingesetzt werden kann, wodurch spezielle Vorbehandlungen vermieden werden, die bisher zur Lackierung von Polypropylensubstraten notwendig waren.

Die erfindungsgemäßen Beschichtungszusammensetzungen sind somit insbesondere als Haftprimer bzw. Haftvermittler für schlecht lackierbare Oberflächen, insbesondere Kunststoffoberflächen und bevorzugt Polypropylenoberflächen geeignet, wie sie beispielsweise im Kraftfahrzeugbau und bei der Kraftfahrzeugreparatur eingesetzt werden. Die erfindungsgemäßen Beschichtungszusammensetzungen sind daher besonders für die Lackierung und Reparatur von Kraftfahrzeugen und Kraftfahrzeugteilen mit Kunststoffoberflächen geeignet.

Der Aufbau der Lackierungen erfolgt im Zwei- oder Dreischichtverfahren. Je nach Beanspruchung erfolgt ein Auftrag im Zweischichtsystem (insbesondere bei Innenbeanspruchung) oder im Dreischichtsystem (insbesondere bei Außenbeanspruchung). Die erfindungsgemäße Beschichtungszusammensetzung wird zur Haftvermittlung beispielsweise im Spritzverfahren auf das zu lackierende Substrat aufgebracht. Anschließend genügt eine Lufttrocknung von z. B. ca. 20 min, es kann jedoch auch im Ofen getrocknet werden. Auf die so erhaltene Beschichtung können übliche Füller und/oder Decklacke, beispielsweise übliche Autoreparaturlack-Produkte, vorzugsweise elastifizierte Zwei-Komponenten-Polyurethanprodukte aufgetragen werden.

### Beispiel:

Es wurde eine Beschichtungszusammensetzung hergestellt durch Auflösen von 2,6 Gewichtsteilen eines Ethylen-vinylacetat-Copolymeren, mit einem Vinylacetatgehalt von 33,0, 6,6 Gewichtsteilen chloriertem Polyolefin (40prozentig in Xylol) mit einem Chlorgehalt von 18 - 23,5 Gew.% und 0,1 Gewichtsteilen eines Epoxidharzes auf der Basis von Bisphenol A und Epichlorhydrin mit einem Molgewicht von etwa 370 in 18 Gewichtsteilen Toluol. Anschließend wurde zur Spritzbarkeit mit 72,7 Gew.% Toluol verdünnt.

Die so erhaltene Beschichtungszusammensetzung wurde auf eine entfettete, gereinigte Polypropylenoberfläche aufgespritzt, so daß sich eine Schichtdicke von 4 µm ergab. Anschließend wurde 20 min and der Luft getrocknet und mit einem Polyurethan-Füller und dann mit einem Polyurethan-Decklack überlackiert. Man erhielt eine ausgezeichnet haftende Beschichtung, von optisch einwandfreiem Aussehen.

## Patentansprüche

1. Beschichtungszusammensetzung, enthaltend
a) 1 - 5 Gew.% eines oder mehrerer Ethylen-vinylactat-Copolymerer mit einem Gehalt an Vinylacetat-Einheiten von 27 - 42 Gew.%,
b) 0,5 - 5 Gew.% eines oder mehrerer chlorierter Polyolefine mit einem Chlorgehalt von 10 bis 25 Gew.%,
c) 0,01 - 5 Gew.% eines oder mehrerer Epoxidharze auf der Basis aromatischer Polyole mit Epichlorhydrin,
d) 85 - 98,49 Gew.% eines oder mehrerer organischer Lösemittel,
sowie gegebenenfalls lacktechnische Hilfsmittel, Pigmente und/oder Füllstoffe.

2. Beschichtungszusammensetzung nach Anspruch 1, dadurch gekennzeichnet, daß sie als Komponente b) chloriertes Polypropylen enthält.

3. Beschichtungszusammensetzung nach Anspruch 1 oder 2, dadurch gekennzeichnet, daß die Komponente c) ein Reaktionsprodukt von Bis-phenol A mit Epichlorhydrin ist.

4. Beschichtungszusammensetzung nach Anspruch 1, 2 oder 3, dadurch gekennzeichnet, daß die Komponente c) ein zahlenmittleres Molekulargewicht von 250 bis 750 und einen Epoxidwert von 0,3 bis 0,7 hat.

5. Beschichtungszusammensetzung nach Anspruch 1, 2, 3 oder 4, dadurch gekennzeichnet, daß ein organisches Lösemittel ein aromatischer Kohlenwasserstoff ist.

6. Beschichtungszusammensetzung nach Anspruch 5, dadurch gekennzeichnet, daß der aromatische Kohlenwasserstoff Toluol und/oder Xylol ist.

7. Verwendung der Beschichtungszusammensetzung nach einem der Ansprüche 1 bis 6 als Haftprimer für Kunststoffoberflächen.

8. Verwendung nach Anspruch 7 als Haftprimer für Polypropylen-Oberflächen.

## Claims

1. Coating composition, containing
a) 1 - 5% by wt. of one or more ethylene-vinyl acetate copolymers with a vinyl acetate unit content of 27 - 42% by wt.,
b) 0.5 - 5% by wt. of one or more chlorinated polyolefins with a chlorine content of 10 to 25% by wt.,
c) 0.01 - 5% by wt. of one or more epoxy resins based on aromatic polyols with epichlorohydrin,
d) 85 - 98.49% by wt. of one or more organic solvents,
and optionally lacquer auxiliaries, pigments and/or extenders.

2. Coating composition according to claim 1, characterised in that it contains chlorinated polypropylene as component b).

3. Coating composition according to claim 1 or 2, characterised in that the component c) is a reaction product of bisphenol A with epichlorohydrin.

4. Coating composition according to claim 1, 2 or 3, characterised in that the component c) has a number-average molecular weight of 250 to 750 and an epoxide value of 0.3 to 0.7.

5. Coating composition according to claim 1, 2, 3 or 4, characterised in that an organic solvent is an aromatic hydrocarbon.

6. Coating composition according to claim 5, characterised in that the aromatic hydrocarbon is toluene and/or xylene.

7. Use of the coating composition according to one of claims 1 to 6 as primer for plastic surfaces.

8. Use according to claim 7 as primer for polypropylene surfaces.

## Revendications

1. Composition de revêtement contenant
a) 1 à 5% en poids d'un ou plusieurs copolymères éthylène-acétate de vinyle à une teneur en motifs d'acétate de vinyle de 27 à 42% en poids,
b) 0,5 à 5% en poids d'une ou plusieurs polyoléfines chlorées à une teneur en chlore de 10 à 25% en poids,
c) 0,01 à 5% en poids d'une ou plusieurs résines époxydiques à base de polyols aromatiques et d'épichlorhydrine,
d) 85 à 98,49% en poids d'un ou plusieurs solvants organiques, et le cas échéant des produits auxiliaires, pigments et/ou matières de charge usuels dans l'industrie des peintures et vernis.

2. Composition de revêtement selon la revendication 1, caractérisée en ce qu'elle contient en tant que composant b) du polypropylène chloré.

3. composition de revêtement selon la revendication 1 ou 2, caractérisée en ce que le composant c) est un produit de réaction du bisphénol A et de l'épichlorhydrine.

4. Composition de revêtement selon les revendications 1, 2 ou 3, caractérisée en ce que le composant c) a un poids moléculaire moyen, moyenne en nombre, de 250 à 750 et un indice d'époxyde de 0,3 à 0,7.

5. Composition de revêtement selon les revendications 1, 2, 3 ou 4, caractérisée en ce que l'un des solvants organiques est un hydrocarbure aromatique.

6. Composition de revêtement selon la revendication 5, caractérisée en ce que l'hydrocarbure aromatique est le toluène et/ou le xylène.

7. Utilisation de la composition de revêtement selon l'une des revendications 1 à 6 en sous-couche d'adhérence pour des surfaces de résines synthétiques.

8. Utilisation selon la revendication 7 en sous-couche d'adhérence pour des surfaces de polypropylène.
